# EUROPÄISCHE PATENTSCHRIFT

(11) **EP 2 560 828 B1**
(45) Veröffentlichungstag und Bekanntmachung des Hinweises auf die Patenterteilung: **26.10.2016**
(21) Anmeldenummer: 11703458.7
(22) Anmeldetag: 15.02.2011
(51) Int. Cl.: B60C 9/20, B60C 9/22

(54) **FAHRZEUGLUFTREIFEN**
PNEUMATIC VEHICLE TYRE
PNEUMATIQUE DE VÉHICULE

(30) Priorität: 21.04.2010 DE 102010016569
(43) Veröffentlichungstag der Anmeldung: 27.02.2013
(73) Patentinhaber: Continental Reifen Deutschland GmbH, 30165 Hannover (DE)
(72) Erfinder: BECKER, Theresia, 30173 Hannover (DE); SCHULTE, Maike, 30449 Hannover (DE); BEDERNA, Christoph, 30890 Barsinghausen (DE)
(74) Vertreter: Finger, Karsten
(86) Internationale Anmeldenummer: PCT/EP2011/052161
(87) Internationale Veröffentlichungsnummer: WO 2011/131383

(56) Entgegenhaltungen:
- EP-A1- 0 675 223
- EP-A1- 1 795 371
- EP-A2- 1 067 236
- EP-A2- 1 886 843
- EP-A2- 2 199 104
- US-A1- 2005 028 511

## Beschreibung

Die Erfindung betrifft einen Fahrzeugluftreifen - insbesondere für Nutzfahrzeuge - mit einer Karkasse, mit einem radial außerhalb der Karkasse aufgebauten Gürtel und mit einem radial außerhalb des Gürtels auf dem Gürtel aufgebauten profilierten Laufstreifen, wobei der Gürtel aus wenigstens drei von radial innen nach radial außen auf einander liegend angeordneten Gürtellagen ausgebildet ist, wobei die radial innere und die radial äußere Gürtellage Arbeitslagen mit in Gummi eingebetteten parallelen Festigkeitsträgern aus Stahl sind, wobei die Festigkeitsträger der radial inneren Arbeitslage in ihrer Ausrichtung einen Winkel α zur Umfangsrichtung U mit 10°<α<45°und die Festigkeitsträger der radial äußeren Arbeitslage einen Winkel γ zur Umfangsrichtung U mit 10°≤γ≤45°einschließen, wobei in Umfangsrichtung U des Fahrzeugreifens gesehen die Festigkeitsträger der einen Arbeitslage eine entgegengesetzte axiale Neigungsrichtung zu den Festigkeitsträgern der anderen Arbeitslage aufweisen, und wobei die zwischen diesen beiden Arbeitslagen angeordnete Gürtellage eine als Nullgradlage ausgebildete Gürtellage mit in Gummi eingebetteten parallelen Festigkeitsträgern ist, die in ihrer Ausrichtung einen Winkel β mit 0°≤β≤5° zur Umfangsrichtung U einschließen.

Herkömmliche Nutzfahrzeugluftreifen weisen üblicherweise einen Vierlagengürtel mit sogenannter Dreieckskonfiguration auf, bei der zwei Arbeitslagen in radialer Richtung aufeinander angeordnet sind, deren Stahlkorde jeweils einen Winkel von ca. 15° bis 30° zur Umfangsrichtung aufweisen, wobei die Stahlkorde der einen Arbeitslage und die der zweiten Arbeitslage in unterschiedlicher axialer Richtung A geneigt sind. Die Arbeitslagen bilden hierdurch einen Kreuzverband. Unterhalb der Arbeitslagen befindet sich bei derartigen Gürteln üblicherweise eine als Sperrlage ausgebildete Gürtellage, deren Stahlkorde einen Winkel von 45° bis 60° zur Umfangsrichtung aufweisen, wodurch die Korde der Arbeitslagen und der Sperrlage einen Dreiecksverband bilden. Zusätzlich ist oberhalb der beiden Arbeitslagen üblicherweise eine die vierte Gürtellage bildende zusätzliche Schutzlage ausgebildet, deren Stahlkorde ebenfalls einen Winkel von ca. 15° bis 30° zur Umfangsrichtung des Fahrzeugreifens aufweisen. Derartige Gürtel weisen eine beschränkte Umfangssteifigkeit auf. Die hierdurch ermöglichte Beweglichkeit der Gürtelränder kann sich negativ auf die Haltbarkeit des Reifens auswirken. Der Gürtel kann darüber hinaus im Betrieb radialen Expansionen unterliegen. Dieses Wachstum kann zu überhöhtem ungleichmäßigem Abrieb des Reifens führen.

Es ist auch bekannt, Nutzfahrzeugluftreifen mit einer Vierlagenanordnung auszubilden mit einer radial inneren Sperrlage mit Stahlkorden, die einen Winkel von ca. 45° bis 65° zur Umfangsrichtung einschließen, mit über der Sperrlage ausgebildeten zwei Arbeitslagen, die in herkömmlicher Weise einen Kreuzverband ihrer Stahlkorde bilden mit einer Ausrichtung der Stahlkorde von jeweils ca. 15° bis 30°, und mit einer radial außerhalb der beiden Arbeitslagen auf die äußere Arbeitslage ausgebildeten vierten Gürtellage, die als sogenannte 0°-Lage ausgebildet ist, wobei deren Festigkeitsträger aus Stahlkorden im Wesentlichen in Umfangsrichtung ausgerichtet sind mit einem Winkel von 0° bis 2,5° zur Umfangsrichtung. Bei derartigen Ausbildungen wird die Umfangssteifigkeit des Gürtels erhöht, was sich positiv auf die Haltbarkeit des Gürtels auswirkt. Der Einfluss der 0°-Lage beschränkt sich jedoch im Wesentlichen auf die radial äußere Arbeitslage. Die innere Arbeitslage ist jedoch mit einer verbleibenden Beweglichkeit ausgebildet, mit weiterhin negativen Einflüssen auf Haltbarkeit und Abrieb.

Darüber hinaus ist gelegentlich eine Ausbildung eines Nutzfahrzeugluftreifens mit einer Gürtelanordnung vorgeschlagen worden, bei der eine 0°-Lage radial zwischen den beiden Arbeitslagen ausgebildet ist. Die beiden Arbeitslagen sind bei diesen vorgeschlagenen Ausbildungen weiterhin im Kreuzverband ausgebildet und ihre Stahlkorde sind mit Winkeln von jeweils ca. 18° zur Umfangsrichtung ausgerichtet. Diese Ausbildung ermöglicht zwar eine hohe Umfangssteifigkeit und gegenüber einem herkömmlichen Nutzfahrzeugluftreifen eine verbesserte Haltbarkeit und ein verbessertes Abriebsbild. Die Stahlkorde dieser bekannten Arbeitslagen sind üblicherweise Stahlkorde des Typs 3x0,20+6x0,35NT. Damit diese Stahlkorde, welche eine Bruchkraft F von 1700N und eine Dehnung bei 10% der Bruchkraft von kleiner als 0,15% aufweisen, eine ausreichende Durchstoßfestigkeit der erhalten, sind eine Vielzahl von im Querschnitt relativ dünnen Stahlkorden in hoher Anordnungsdichte in den Arbeitslagen ausgebildet. Stahlkorde großer Querschnittsdicke, die die Gürtelhaltbarkeit begünstigen würden, sind hierdurch nur begrenzt einsetzbar. Selbst wenn Sie eingesetzt würden, bewirken die zur Begrenzung der Durchstoßgefahr erforderliche hohe Anordnungsdichte hohes Gürtellagengewicht, große Materialmengen und negativen Einfluss auf den Abrieb.

**Aus der** EP1795371A1 **ist bei mehrteiligen Reifen für Erdmaschinen eine Gürtelausbildung gemäß den Merkmalen des Oberbegriffs des Anspruchs 1 bekannt. Aus der** EP1886843A2 **ist ein Fahrzeugluftreifen gemäß den Merkmalen des Oberbegriffs von Anspruch 1 bekannt.**

Der Erfindung liegt die Aufgabe zugrunde einen derartigen Fahrzeugluftreifen - insbesondere für Nutzfahrzeuge - mit wenigstens drei Gürtellagen zu schaffen, bei dem in einfacher Weise verbesserte Durchstoßfestigkeit, bei gutem Abriebsverhalten und hoher Haltbarkeit ermöglicht wird.

Die Aufgabe wird erfindungsgemäß durch die Ausbildung eines Fahrzeugluftreifens - insbesondere für Nutzfahrzeuge - mit einer Karkasse, mit einem radial außerhalb der Karkasse aufgebauten Gürtel und mit einem radial außerhalb des Gürtels auf dem Gürtel aufgebauten profilierten Laufstreifen, wobei der Gürtel aus wenigstens drei von radial innen nach radial außen auf einander liegend angeordneten Gürtellagen ausgebildet ist, wobei die radial innere und die radial äußere Gürtellage Arbeitslagen mit in Gummi eingebetteten parallelen Festigkeitsträgern aus Stahl sind, wobei die Festigkeitsträger der radial inneren Arbeitslage in ihrer Ausrichtung einen Winkel α zur Umfangsrichtung U mit 10°<α<45°und die Festigkeitsträger der radial äußeren Arbeitslage einen Winkel γ zur Umfangsrichtung U mit 10°≤γ≤45°einschließen, wobei in Umfangsrichtung U des Fahrzeugreifens gesehen die Festigkeitsträger der einen Arbeitslage eine entgegengesetzte axiale Neigungsrichtung zu den Festigkeitsträgern der anderen Arbeitslage aufweisen, und wobei die zwischen diesen beiden Arbeitslagen angeordnete Gürtellage eine als Nullgradlage ausgebildete Gürtellage mit in Gummi eingebetteten parallelen Festigkeitsträgern ist, die in ihrer Ausrichtung einen Winkel β mit 0°≤β≤5° zur Umfangsrichtung U einschließen, gemäß den Merkmalen von Anspruch 1 gelöst, bei dem die Festigkeitsträger der beiden Arbeitslagen jeweils eine Bruchkraft F mit F>1800N und bei 10% der Bruchkraft eine Dehnung D von **0,28%≤ D ≤ 0,32%** aufweisen.

Durch diese Ausbildung wird die Nutzung des Vorteil einer hohe Umfangssteifigkeit des Gürtels über die 0°-Lage in ihrer die beiden Arbeitslagen entkoppelnden Position zwischen den beiden Arbeitslagen ermöglicht, die unmittelbar beide Arbeitslagen beeinflusst, wodurch die Gürtellagenränder jeweils in ihrer Beweglichkeit behindert werden und auch dem Gürtelwachstum im hierfür kritischen Bereich zwischen Gürtelmitte und den Gürtelrändem entgegengewirkt wird. Die Festigkeitsträger der Arbeitslagen ermöglichen durch ihre hohe Bruchkraft und Dehnung eine erhöhte Durchschlagsfestigkeit der Arbeitslagen und hohe Haltbarkeit bei gutem Abrieb. Die Festigkeitsträger ermöglichen auch bei relativ dicken Querschnitten geringer Anordnungsdichte der Festigkeitsträger eine hohe Durchschlagsfestigkeit, wodurch bei relativ geringem Gürtellagengewicht und Materialaufwand hohe Durchschlagsfestigkeit und Haltbarkeit bei weiter begünstigtem Abriebsverhalten umgesetzt werden kann.

Besonders vorteilhaft ist die Ausbildung eines Fahrzeugluftreifens gemäß den Merkmalen von Anspruch 2, wobei die Festigkeitsträger der beiden Arbeitslagen jeweils eine Bruchkraft F mit F> 2500N. Hierdurch wird eine optimale Durchstoßfestigkeit gegen Kordbrüche ermöglicht.

Besonders vorteilhaft ist die Ausbildung eines Fahrzeugluftreifens gemäß den Merkmalen von Anspruch **3**, wobei radial außerhalb der radial äußeren Arbeitslage auf der äußeren Arbeitslage eine weitere Gürtellage mit parallelen in Gummi eingebetteten Festigkeitsträgern ausgebildet ist, da durch die zusätzliche äußere Gürtellage der Schutz gegen Durchstoßen weiter erhöht werden kann.

Besonders vorteilhaft ist die Ausbildung eines Fahrzeugluftreifens gemäß den Merkmalen von Anspruch **4**, wobei die weitere Gürtellage als Nullgradlage ausgebildet ist, deren Festigkeitsträger in ihrer Ausrichtung einen Winkel δ zur Umfangsrichtung U des Fahrzeugluftreifens mit 0°≤ δ ≤ 5°einschließen, da hierdurch die Umfangskräfte maßgeblich auf zwei Gürtellagen verteilt werden. Hierdurch kann auch bei eventuell im Einsatz des Reifens auftretenden zu hohen Belastungen Kordbrüchen zusätzlich entgegengewirkt werden.

Besonders vorteilhaft ist die Ausbildung eines Fahrzeugluftreifens gemäß den Merkmalen von Anspruch **5**, wobei die Festigkeitsträger der zusätzlichen Gürtellage in ihrer Ausrichtung einen Winkel δ zur Umfangsrichtung U des Fahrzeugluftreifens mit 10°≤δ≤90° - insbesondere mit 15°≤δ≤45°- einschließen. Die hierdurch erzielte Schersteifigkeit wirkt sich positiv auf die Erzielung eines gleichmäßigen Abriebsbildes aus bei zusätzlichem Schutz gegen das Eindringen von Steinen.

Besonders vorteilhaft ist die Ausbildung eines Fahrzeugluftreifens gemäß den Merkmalen von Anspruch **6**, wobei radial innerhalb der radial inneren Arbeitslage zwischen der Karkasse und der radial inneren Arbeitslage eine weitere Gürtellage mit parallelen in Gummi eingebetteten Festigkeitsträgern ausgebildet ist, deren Festigkeitsträger in ihrer Ausrichtung einen Winkel ε zur Umfangsrichtung U des Fahrzeugluftreifens - insbesondere mit 45°≤ε≤90° - einschließen, weil die zusätzliche gebildete Sperrlage einen optimalen Kraftfluss von der Karkasse in den aus den Gürtellagen gebildeten Gürtel bietet und außerdem die Bewegung der Arbeitslagen reduziert und daher die Haltbarkeit weiter verbessert.

Besonders vorteilhaft ist die Ausbildung eines Fahrzeugluftreifens gemäß den Merkmalen von Anspruch **7**, wobei die radial zwischen den beiden Arbeitslagen angeordnete Nullgradlage in ihrer axialen Erstreckung im Fahrzeugluftreifen - insbesondere mindestens 10 mm - kleiner ausgebildet ist als jede der beiden Arbeitslagen, da hierdurch eine erhöhte Haltbarkeit der Nullgradlage ermöglicht wird.

Besonders vorteilhaft ist die Ausbildung eines Fahrzeugluftreifens gemäß den Merkmalen von Anspruch **8**, wobei die Nullgradlage zu beiden axialen Seiten hin innerhalb des axialen Erstreckungsbereiches einer jeden der beiden Arbeitslagen endet, wodurch die Beweglichkeit der Kanten der Nullgradlage weiter eingeschränkt und die Haltbarkeit des Gürtels weiter verbessert werden kann.

Besonders vorteilhaft ist die Ausbildung eines Fahrzeugluftreifens gemäß den Merkmalen von Anspruch **9**, wobei die radial äußere der beiden Arbeitslagen in ihrer axialen Erstreckung im Fahrzeugluftreifen kleiner ausgebildet ist als die radial innere der beiden Arbeitslagen, wobei insbesondere die radial äußere der beiden Arbeitslagen zu beiden axialen Seiten hin innerhalb des axialen Erstreckungsbereiches der radial inneren der beiden Arbeitslagen endet. Hierdurch kann vermieden werden, dass die äußere Arbeitslage im Bereich der Schultern einer hohen Bewegung ausgesetzt wird. Die Haltbarkeit kann somit weiter verbessert werden.

Besonders vorteilhaft ist die Ausbildung eines Fahrzeugluftreifens gemäß den Merkmalen von Anspruch **10**, wobei die Festigkeitsträger der Nullgradlage(n) Festigkeitsträger aus Stahl sind. Hierdurch wird eine hohe Umfangssteifigkeit und eine gute Haltbarkeit und gleichmäßiger Abrieb weiter begünstigt.

Besonders vorteilhaft ist die Ausbildung eines Fahrzeugluftreifens gemäß den Merkmalen von Anspruch **11**, wobei die Festigkeitsträger wenigstens der zwischen den Arbeitslagen angeordneten Nullgradlage High-Elongation-Korde sind. Hierdurch kann in einfacher Weise die Erhebung des Gürtels im Aufbauprozess ermöglicht werden

Besonders vorteilhaft ist die Ausbildung eines Fahrzeugluftreifens gemäß den Merkmalen von Anspruch **12**, wobei die Festigkeitsträger der zusätzlichen Gürtellage Festigkeitsträger aus Stahl sind, da hierdurch in einfacher Weise guter Schutz gegen Durchstoßen begünstigt wird.

Die Erfindung wird im Folgenden an Hand der in den Fig. 1 bis Fig.6 dargestellten Ausführungsbeispiele eines Nutzfahrzeugluftreifens radialer Bauart erläutert. Darin zeigen
- Fig. 1: die Querschnittsdarstellung eines Fahrzeugluftreifens für Nutzfahrzeuge radialer Bauart,
- Fig.2: eine Draufsicht auf den Gürtel von Fig. 1 gemäß Schnitt II - II von Fig. 1, bei der zur Vereinfachung alle anderen Bauteile des Reifens nicht dargestellt sind,
- Fig.3: eine ausschnittsweise Querschnittsdarstellung eines Fahrzeugluftreifens analog zur Darstellung von Fig. 1 mit alternativer Gürtelausbildung,
- Fig.4: Draufsicht auf den Gürtel von Fig.3 gemäß Schnitt IV - IV von Fig.3, bei der zur Vereinfachung alle anderen Bauteile des Reifens nicht dargestellt sind,
- Fig.5: eine ausschnittsweise Querschnittsdarstellung eines Fahrzeugluftreifens analog zur Darstellung von Fig.1 mit weiterer alternativer Ausbildung des Gürtels,
- Fig.6: Draufsicht auf den Gürtel von Fig.5 gemäß Schnitt VI - VI von Fig.5, bei der zur Vereinfachung alle anderen Bauteile des Reifens nicht dargestellt sind.

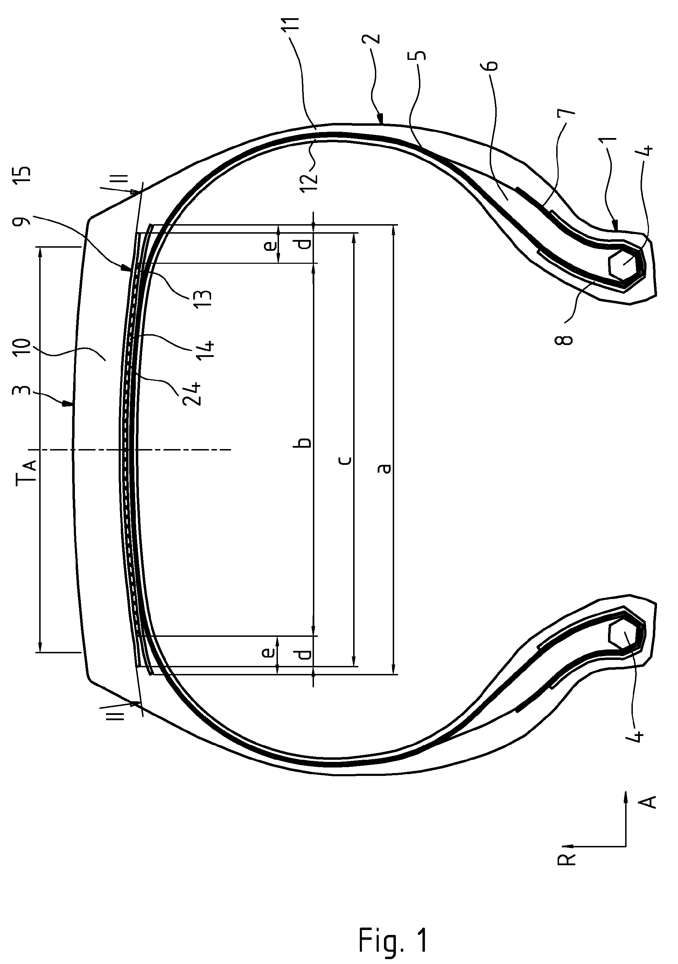

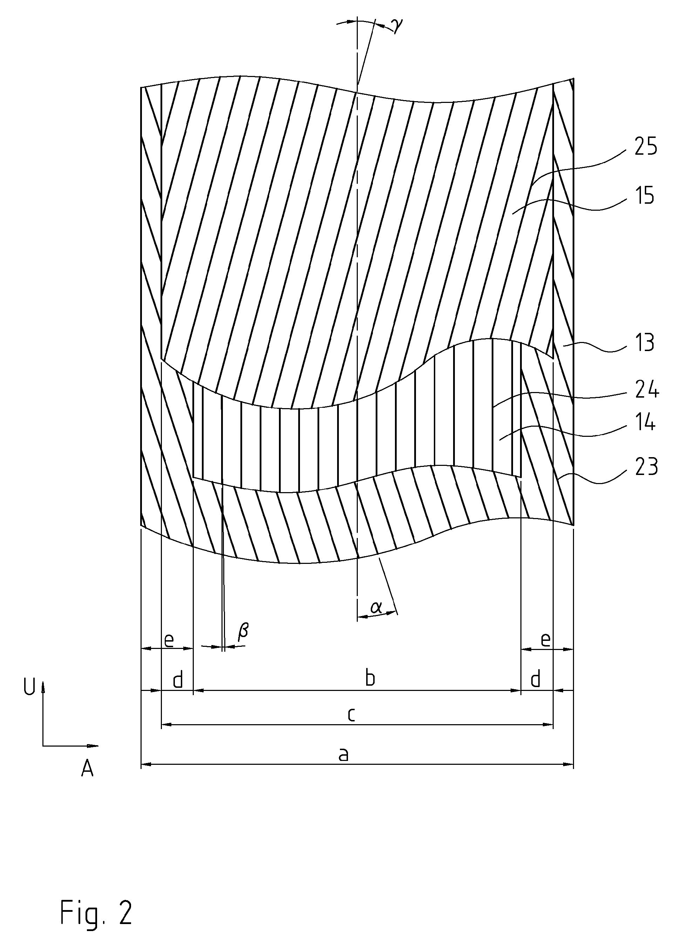

Fig.1 und Fig.2 zeigen einen Nutzfahrzeugluftreifen radialer Bauart mit zwei in radialer Richtung R des Fahrzeugreifens erstreckten Seitenwänden 2 und einem axial dazwischen ausgebildeten Kronenbereich 3. Die Seitenwände sind an ihrem in radialer Richtung nach innen weisenden Erstreckungsende jeweils mit einem Wulstbereich 1 ausgebildet in dem ein in Umfangsrichtung U zugfester über den Umfang des Reifens in Umfangsrichtung erstreckter Wulstkern 4 bekannter Art ausgebildet ist. Die Wulstkerne 4 sind in bekannter Weise aus in Umfangsrichtung U des Fahrzeugluftreifens erstrecktem in Gummi eingebettetem Draht gewickelt ausgebildet. Auf den Wulstkernen 4 ist in herkömmlicher Weise ein im Querschnitt dreiecksförmiger Apex (Kernreiter) 6 aus hartem Gummimaterial ausgebildet. Der Fahrzeugluftreifen ist mit einer Karkasse 5 ausgebildet, welche sich ausgehend vom im linken Wulstbereich 1 des Fahrzeugluftreifens ausgebildeten Wulstkern 4 in radialer Richtung R des Fahrzeugluftreifens nach außen durch die linke Seitenwand 2 hindurch bis zum Kronenbereich 3 und im Kronenbereich 3 in axialer Richtung A des Fahrzeugluftreifens bis zur rechten Seitenwand 2 und in der rechten Seitenwand 2 des Fahrzeugluftreifens nach radial innen bis zum im Wulstbereich 1 der rechten Seitenwand 2 ausgebildeten Wulstkern 4 erstreckt. Die Karkasse ist in beiden Wulstbereichen 1 jeweils entlang der axialen Innenseite des Wulstkernes 4 bis zur radialen Innenseite des jeweiligen Wulstkernes 4, dann in Verlängerung in axialer Richtung entlang des radialen Innenseite des Wulstkernes 4 bis zur axialen Außenseite des Wulstkernes 4 und dann in Verlängerung auf der axialen Außenseite des Wulstkernes 4 als Umschlagsteil 7 nach radial außen erstreckt ausgebildet. Die Karkasse 5 erstreckt sich mit ihrem Umschlagsteil 7 entlang der axialen Außenseite des Apex 6 und endet auf der axialen Außenseite des Apex 7. Die Karkasse ist in bekannter nicht näher dargestellter Weise aus einer in Umfangsrichtung U über den gesamten Umfang des Fahrzeugluftreifens erstreckten Karkassenlage mit in Gummi eingebetteten parallelen Korden - beispielsweise Stahlkorden - , welche sich im Bereich der Seitenwände 2 im Wesentlichen in radialer Richtung R und im Kronenbereich im Wesentlichen in axialer Richtung A erstrecken, ausgebildet. Vom linken Wulstbereich 1 bis zum rechten Wulstbereich 1 erstreckt sich auf der zur Reifeninnenseite hinweisenden Seite der Karkasse 5 eine Innenschicht 12 aus bekanntem besonders luftundurchlässigem Gummimaterial. Im Wulstbereich 1 ist jeweils ein zusätzlicher Wulstverstärkerstreifen 8, welcher sich über den gesamten Umfang des Fahrzeugluftreifens erstreckt, auf der vom Wulstkern 4 wegweisenden Seite der Karkasse 5 ausgebildet. Der Wulstverstärkerstreifen 8 ist beispielsweise ein aus parallelen Festigkeitsträgern textiler oder metallischer Bauart in Gummi eingebetteter Materialstreifen.

Im Bereich der Reifenkrone 3 ist in radialer Richtung R des Fahrzeugluftreifens außerhalb der Karkasse 5 auf der Karkasse 5 ein über den gesamten Umfang des Fahrzeugluftreifens in Umfangsrichtung U und in axialer Richtung A von der linken Reifenschulter bis zu der rechten Reifenschulter erstreckter Gürtel 9 ausgebildet, welcher aus drei in radialer Richtung R übereinander und aufeinanderliegend angeordneten Gürtellagen 13, 14 und 15 ausgebildet ist. Radial außerhalb des Gürtels 9 ist auf dem Gürtel 9 ein über den gesamten Umfang des Fahrzeugluftreifens in Umfangsrichtung U erstreckter und in axialer Richtung A von der linken Reifenschulter bis zur rechten Reifenschulter erstreckter profilierter Laufstreifen 10 bekannter Art ausgebildet, welche den Gürtel 9 vollständig bedeckt. Im Bereich der Reifenseitenwände 2 ist auf der axial vom Reifen weg weisenden Seite der Karkasse 5 in bekannter Weise ein Seitenwandgummistreifen 11 ausgebildet, welcher sich in radialer Richtung R vom Wulstbereich 1 bis zum profilierten Laufstreifen 10 im Kronenbereich 3 erstreckt.

Die radial innere Gürtellage 13 und die radial äußere Gürtellage 15 sind als Arbeitslagen des Reifens ausgebildet und erstrecken sich jeweils in Umfangsrichtung U über den gesamten Umfang des Fahrzeugluftreifens und in axialer Richtung A von linker Reifenschulter bis zur rechten Reifenschulter. Die Arbeitslage 13 ist aus einer Lage von in Gummi eingebetteten fadenförmigen parallelen Festigkeitsträgern 23 ausgebildet, welche sich über die gesamte in axialer Richtung A gemessene Breite a der Gürtellage 13 im Wesentlichen geradlinig erstrecken und einen Neigungswinkels α zur Umfangsrichtung U einschließen mit 10° ≤ α ≤ 45°. Die Arbeitslage 15 ist aus einer Lage von in Gummi eingebetteten fadenförmigen parallelen Festigkeitsträgern 25 ausgebildet, welche sich über die gesamte axiale Breite c der Gürtellage 15 im Wesentlichen geradlinig erstrecken und einen Neigungswinkel γ zur Umfangsrichtung U einschließen mit 10°≤γ≤45°. Die Neigungsrichtung der Festigkeitsträger 25 der Arbeitslagen 15 längs der Umfangsrichtung U gesehen ist in entgegengesetzter axialer Richtung A zur Neigungsrichtung der Festigkeitsträger 23 der Arbeitslage 13 ausgebildet. Die zwischen den beiden Arbeitslagen 15 und 13 ausgebildete dritte Gürtellage 14 erstreckt sich in Umfangsrichtung U über den gesamten Umfang des Fahrzeugluftreifens und in axialer Richtung von linker Reifenschulter zur rechten Reifenschulter und ist als 0°-Lage ausgebildet. Hierzu ist die Gürtellage 14 aus parallelen fadenförmigen in Gummi eingebetteten Festigkeitsträgern ausgebildet, die sich geradlinig über den gesamten Umfang des Fahrzeugluftreifens unter Einschluss eines Winkels β mit 0° ≤ β ≤ 5° zur Umfangsrichtung U erstrecken und somit im Wesentlichen in Umfangsrichtung U des Fahrzeugluftreifens ausgerichtet sind. Alle drei Gürtellagen 13, 14 und 15 erstrecken sich zu beiden axialen Seiten jeweils bis in eine Position in der jeweiligen Reifenschulter, die axial außerhalb der Bodenaufstandsfläche - dargestellt durch die axiale Breite Tₐ der Bodenaufstandsfläche, liegt. Die Gürtellage 14 ist über ihre gesamte axiale Erstreckung in direktem Berührkontakt sowohl zu der unter ihr angeordneten Arbeitslage 13 als auch zu der über ihr angeordneten Arbeitslage 15.

Die 0°-Lage 14 erstreckt sich in axialer Richtung A über eine axiale Breite b, die untere Arbeitslage 13 erstreckt sich in axialer Richtung A über eine axiale Breite a und die obere Arbeitslage 15 erstreckt sich in axialer Richtung A über eine axiale Breite c im Reifen mit a > c > b. Dabei erstreckt sich zu beiden axialen Seiten der 0°-Lage 14 die innere Arbeitslage 13 um eine axiale Erstreckungslänge e über die axiale Position des jeweiligen Gürtelrandes der 0°-Lage 14 hinaus. Ebenso erstreckt sich die äußere Arbeitslage 15 in beide axiale Richtungen jeweils um eine axiale Erstreckungslänge d über die axiale Position des jeweiligen Gürtelrandes der 0°-Lage 14 hinaus. Für die Erstreckungslängen e und d dieses Überhangs gilt e > d. Das Maß d ist dabei mit d ≥ 10 mm ausgebildet. Das Maß e ist im Ausführungsbeispiel mit e ≤ 60 mm ausgebildet. Auch im Bereich des Überhangs berühren sich die beiden Arbeitslagen 13 und 15 nicht.

Die Festigkeitsträger 23 und 25 der beiden Arbeitslagen 13 und 15 sind Stahlkorde bekannter Art, die bei Belastung auf Zug eine Bruchkraft F von F>2500N und bei 10% der Bruchkraft eine Dehnung D von 0,28% ≤ D ≤ 0,32% aufweisen. Derartige Stahlkorde sind beispielsweise Stahlkorde des Typs 3+8x0,35HT mit einer Bruchkraft F=3000N und mit einer Dehnung D von D=3,0% bei 10% der Bruchkraft. Die Werte sind mit der BISFA E6 Standard-Testmethode für Stahlkorde ermittelt.

Die Festigkeitsträger 24 sind in einer Ausführung Stahlkorde bekannter Art. In einer anderen Ausführung sind die Festigkeitsträger 24 Stahlkorde, die in bekannter Weise als High-Elongation-Kord (HE-Kord) ausgebildet sind. Derartige hochdehnbare High-Elongation-Korde weisen einen E-Modul bei einer Dehnung zwischen 0% und 2 % auf, der geringer ist als ihr E-Modul bei einer Dehnung mit mehr als 2 %.

In einem Ausführungsbeispiel ist β = 1 °, α = 20°, γ = 20°, d = 11 mm und e = 15 mm gewählt.

In einer nicht dargestellten alternativen Ausführung der oben genannten Ausführungen ist jeweils der Neigungswinkel α der Festigkeitsträger 23 der inneren Arbeitslage 13 größer ausgebildet als der Neigungswinkel γ der Festigkeitsträger 25 der äußeren Arbeitslage 15.

In einer nicht dargestellten alternativen Ausführung der oben genannten Ausführungen ist jeweils der Neigungswinkel α der Festigkeitsträger 23 der inneren Arbeitslage 13 kleiner ausgebildet als der Neigungswinkel γ der Festigkeitsträger 25 der äußeren Arbeitslage 15.

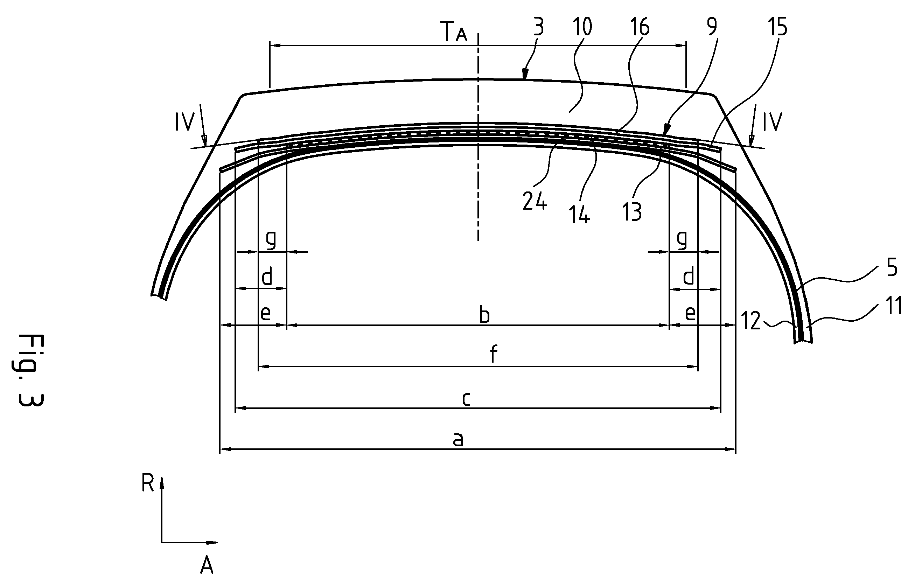

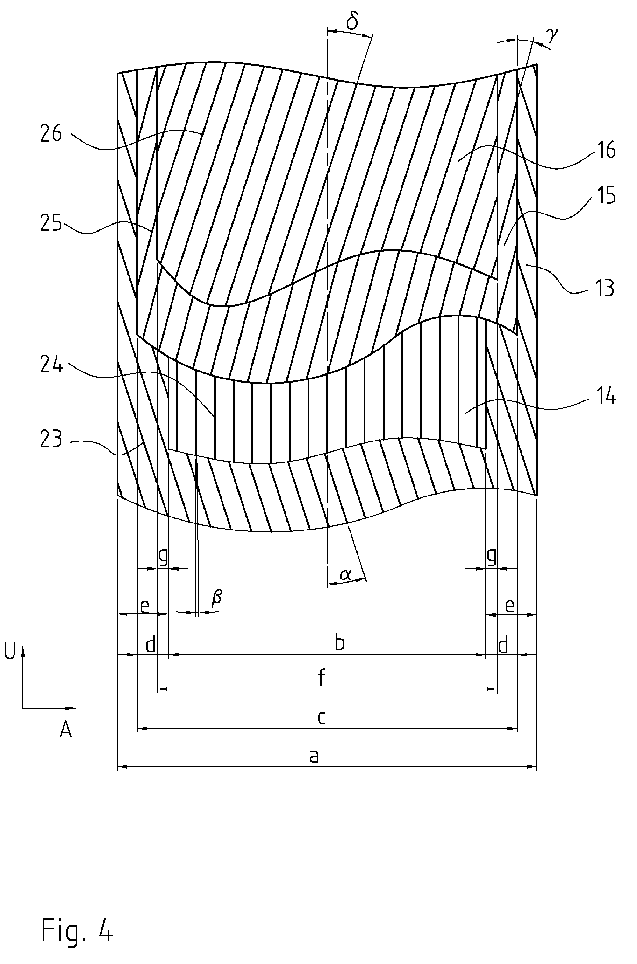

Fig.3 und Fig.4 zeigen eine weitere alternative Ausführung, bei der der Gürtel 9 zusätzlich zu den in den Fig. 1 und Fig.2 dargestellten Gürtellagen 13, 14 und 15 auf der radialen Außenseite der äußeren Arbeitslage 15 mit einer zusätzlichen Gürtellage 16 ausgebildet ist, welche sich in Umfangsrichtung U über den gesamten Umfang des Fahrzeugluftreifens und in axialer Richtung A des Fahrzeugluftreifens von linker Reifenschulter bis zur rechten Reifenschulter erstreckt. Die Gürtellage 16 ist aus einer Lage von in Gummi eingebetteten fadenförmigen parallelen Festigkeitsträgern 26 ausgebildet, welche sich über die gesamte axiale Breite f der Gürtellage 16 im Wesentlichen geradlinig erstrecken und einen Neigungswinkel δ zur Umfangsrichtung U einschließen mit 15°≤δ≤45°. Die Gürtellage 16 erstreckt sich über ihre gesamte axiale Erstreckung in unmittelbarem Berührkontakt zur Arbeitslage 15 und endet in axialer Richtung A an ihren beiden Gürtellagenrändern jeweils in einer axialen Position zwischen dem nächstliegenden Gürtellagenrand der 0°-Lage 14 und dem nächstliegenden Gürtellagenrand der radial äußeren Arbeitslage 15 im axialen Abstand g vom Gürtellagenrand der 0°-Lage 14 mit g < d. Die Breite f ist das Maß der axialen Erstreckung der zusätzliche Gürtellage 16 mit b < f < c < a.

Die Festigkeitsträger 26 der Gürtellage 16 sind in einem Ausführungsbeispiel mit gleicher Neigungsrichtung ausgebildet wie die Festigkeitsträger 25 der Arbeitslage 15.

Die Festigkeitsträger 26 sind Stahlkorde bekannter Art.

In einer anderen nicht dargestellten Ausführung ist die zusätzliche Gürtellage 16 als 0°-Lage ausgebildet und der Neigungswinkel δ ihrer über den gesamten Umfang des Fahrzeugluftreifens erstreckten Festigkeitsträger 26 mit 0° ≤ δ ≤ 5°. Bei Ausbildung der zusätzlichen Arbeitslage 16 als 0°-Lage sind die Festigkeitsträger 26 in einer Ausführung Stahlkorde bekannter Art. In einer anderen Ausführung sind die Festigkeitsträger 26 der als 0°-Lage ausgebildeten Arbeitslage 16 Stahlkorde, die in bekannter Weise als High-Elongation-Kord (HE-Kord) ausgebildet sind. Derartige hochdehnbare High-Elongation-Korde weisen einen E-Modul bei einer Dehnung zwischen 0% und 2 % auf, der geringer ist als ihr E-Modul bei einer Dehnung mit mehr als 2 %.

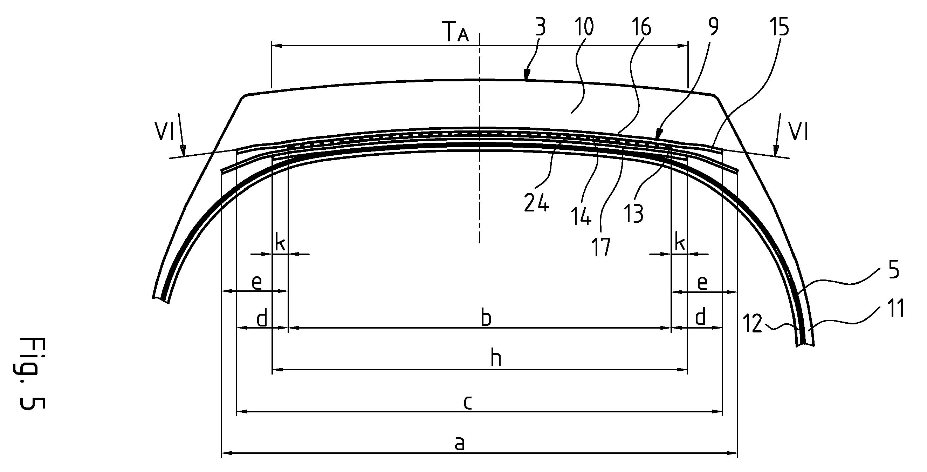

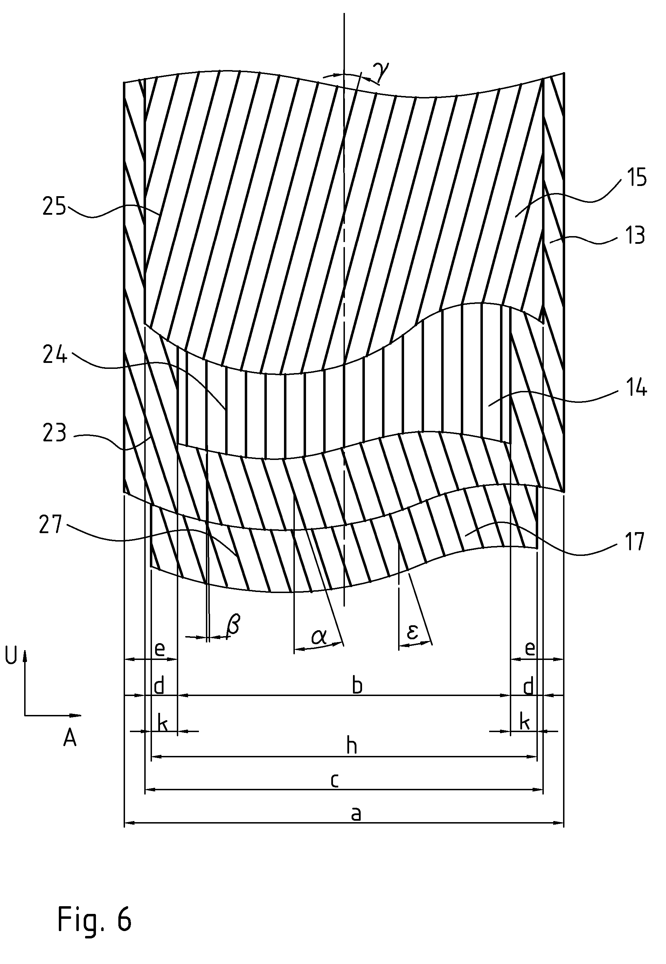

Fig.5 und Fig.6 zeigen ein weiteres alternatives Ausführungsbeispiel, bei dem anders als in bei den in Fig.1 und Fig.2 dargestellten und erläuterten Ausführungsbeispielen der Gürtel 9 zusätzlich mit einer in radialer Position zwischen radial innere Arbeitslage 13 und Karkasse 5 angeordneten Gürtellage 17 ausgebildet ist, welche sich in Umfangsrichtung U über den gesamten Umfang des Fahrzeugluftreifens und in axialer Richtung A des Fahrzeugluftreifens von linker Reifenschulter bis zur rechten Reifenschulter erstreckt. Die Gürtellage 17 ist aus einer Lage von in Gummi eingebetteten fadenförmigen parallelen Festigkeitsträgern 27 ausgebildet, welche sich über die gesamte axiale Breite h der Gürtellage 17 im Wesentlichen geradlinig erstrecken und einen Neigungswinkel ε zur Umfangsrichtung U einschließen mit 45° ≤ε≤ 90°, beispielsweise mit ε = 50°. Die Gürtellage 17 erstreckt sich über ihre gesamte axiale Erstreckung in unmittelbarem Berührkontakt zur Arbeitslage 13 und endet in axialer Richtung A an ihren beiden Gürtellagenrändern jeweils in einer axialen Position zwischen dem nächstliegenden Gürtellagenrand der 0°-Lage 14 und dem nächstliegenden Gürtellagenrand der radial äußeren Arbeitslage 15 im axialen Abstand k vom Gürtellagenrand der 0°-Lage 14 mit k < d < e. Die Breite h ist das Maß der axialen Erstreckung der zusätzliche Gürtellage 17 mit b < h < c < a.

Die Festigkeitsträger 27 der Gürtellage 17 sind in einem Ausführungsbeispiel mit gleicher Neigungsrichtung ausgebildet wie die Festigkeitsträger 23 der radial inneren Arbeitslage 13.

Die Festigkeitsträger 27 sind Stahlkorde bekannter Art.

In weiteren alternativen, nicht dargestellten Ausführungen ist bei den im Zusammenhang mit den Fig.3 und Fig.4 dargestellten Ausführungen mit zusätzlicher Gürtellage 16 auch die im Zusammenhang mit den Fig.5 und Fig.6 dargestellte zusätzliche innere Gürtellage 17 ausgebildet. In diesem Fall ist der Gürtel 9 aus einer 5-Lagenanordnung mit den von radial innen nach radial außen übereinander angeordneten Gürtellagen 17, 13, 14, 15 und 16 ausgebildet.

### Bezugszeichenliste

### (Teil der Beschreibung)

- 1: Wulstbereich
- 2: Seitenwand
- 3: Kronenbereich
- 4: Wulstkern
- 5: Karkasse
- 6: Apex (Kernreiter)
- 7: Karkassenumschlag
- 8: Wulstverstärkungsstreifen
- 9: Gürtel
- 10: Profilierter Laufstreifen
- 11: Seitenwandgummistreifen
- 12: Innenschicht
- 13: Gürtellage (Arbeitslage)
- 14: Gürtellage (Nullgradlage)
- 15: Gürtellage (Arbeitslage)
- 16: Gürtellage
- 17: Gürtellage
- 23: Festigkeitsträger
- 24: Festigkeitsträger
- 25: Festigkeitsträger
- 26: Festigkeitsträger
- 27: Festigkeitsträger

## Patentansprüche

1. Fahrzeugluftreifen - insbesondere für Nutzfahrzeuge - mit einer Karkasse (5), mit einem radial außerhalb der Karkasse (5) aufgebauten Gürtel (9) und mit einem radial außerhalb des Gürtels (9) auf dem Gürtel (9) aufgebauten profilierten Laufstreifen (10), wobei der Gürtel (9) aus wenigstens drei von radial innen nach radial außen auf einander liegend angeordneten Gürtellagen (13,14,15) ausgebildet ist, wobei die radial innere (13) und die radial äußere (15) Gürtellage Arbeitslagen mit in Gummi eingebetteten parallelen Festigkeitsträgern (23,25) aus Stahl sind, wobei die Festigkeitsträger (23) der radial inneren Arbeitslage (13) in ihrer Ausrichtung einen Winkel α zur Umfangsrichtung U mit 10°<α<45°und die Festigkeitsträger (25) der radial äußeren Arbeitslage (15) einen Winkel γ zur Umfangsrichtung U mit 10°≤γ≤45°einschließen, wobei in Umfangsrichtung U des Fahrzeugreifens gesehen die Festigkeitsträger (23) der einen Arbeitslage (13) eine entgegengesetzte axiale Neigungsrichtung zu den Festigkeitsträgern (25) der anderen Arbeitslage (15) aufweisen, und
wobei die zwischen diesen beiden Arbeitslagen (13,15) angeordnete Gürtellage (14) eine als Nullgradlage ausgebildete Gürtellage (14) mit in Gummi eingebetteten parallelen Festigkeitsträgern (24) ist, die in ihrer Ausrichtung einen Winkel β mit 0'≤β≤5° zur Umfangsrichtung U einschließen,
**dadurch gekennzeichnet,**
**dass** die Festigkeitsträger (23,25) der beiden Arbeitslagen (13,15) jeweils eine Bruchkraft F mit F>1800N und bei 10% der Bruchkraft eine Dehnung D von **0,28%≤ D ≤ 0,32%** aufweisen.

2. Fahrzeugluftreifen gemäß den Merkmalen von Anspruch 1,
wobei die Festigkeitsträger (23,25) der beiden Arbeitslagen (13,15) jeweils eine Bruchkraft F mit F> 2500N.

3. Fahrzeugluftreifen gemäß den Merkmalen von einem der vorangegangenen Ansprüche,
wobei radial außerhalb der radial äußeren Arbeitslage (15) auf der äußeren Arbeitslage (15) eine weitere Gürtellage (16) mit parallelen in Gummi eingebetteten Festigkeitsträgern (26) ausgebildet ist.

4. Fahrzeugluftreifen gemäß den Merkmalen von Anspruch **3**,
wobei die weitere Gürtellage (16) als Nullgradlage ausgebildet ist, deren Festigkeitsträger (26) in ihrer Ausrichtung einen Winkel δ zur Umfangsrichtung U des Fahrzeugluftreifens mit 0°< δ ≤5° einschließen.

5. Fahrzeugluftreifen gemäß den Merkmalen von Anspruch **3**,
wobei die Festigkeitsträger (26) der zusätzlichen Gürtellage (16) in ihrer Ausrichtung einen Winkel δ zur Umfangsrichtung U des Fahrzeugluftreifens mit 10°≤δ≤90° - insbesondere mit 15°≤δ≤45°- einschließen.

6. Fahrzeugluftreifen gemäß den Merkmalen von einem der vorangegangenen Ansprüche,
wobei radial innerhalb der radial inneren Arbeitslage (13) zwischen der Karkasse (5) und der radial inneren Arbeitslage (13) eine weitere Gürtellage (17) mit parallelen in Gummi eingebetteten Festigkeitsträgern (27) ausgebildet ist, deren Festigkeitsträger (27) in ihrer Ausrichtung einen Winkel ε zur Umfangsrichtung U des Fahrzeugluftreifens - insbesondere mit 45°≤ε≤90° - einschließen.

7. Fahrzeugluftreifen gemäß den Merkmalen von einem der vorangegangenen Ansprüche,
wobei die radial zwischen den beiden Arbeitslagen (13,15) angeordnete Nullgradlage (14) in ihrer axialen Erstreckung b im Fahrzeugluftreifen - insbesondere mindestens 10 mm - kleiner ausgebildet ist als jede der beiden Arbeitslagen (13,15).

8. Fahrzeugluftreifen gemäß den Merkmalen von Anspruch **7**,
wobei die Nullgradlage (14) zu beiden axialen Seiten hin innerhalb des axialen Erstreckungsbereiches einer jeden der beiden Arbeitslagen (13,15) endet.

9. Fahrzeugluftreifen gemäß den Merkmalen von einem der vorangegangenen Ansprüche,
wobei die radial äußere der beiden Arbeitslagen (15) in ihrer axialen Erstreckung c im Fahrzeugluftreifen kleiner ausgebildet ist als die radial innere der beiden Arbeitslagen (13),
wobei insbesondere die radial äußere (15) der beiden Arbeitslagen (13,15) zu beiden axialen Seiten hin innerhalb des axialen Erstreckungsbereiches der radial inneren (13) der beiden Arbeitslagen (13,15) endet.

10. Fahrzeugluftreifen gemäß den Merkmalen von einem oder mehreren der vorangegangenen Ansprüche,
wobei die Festigkeitsträger (24,26) der Nullgradlage(n) (14,16) Festigkeitsträger aus Stahl sind.

11. Fahrzeugluftreifen gemäß den Merkmalen von Anspruch einem oder mehreren der vorangegangenen Ansprüche,
wobei die Festigkeitsträger (24) wenigstens der zwischen den Arbeitslagen (13,15) angeordneten Nullgradlage (14) High-Elongation-Korde (HE) sind.

12. Fahrzeugluftreifen gemäß den Merkmalen von einem der Ansprüche **3 bis 6**, wobei die Festigkeitsträger (26,27) der zusätzlichen Gürtellage (16,17) Festigkeitsträger aus Stahl sind.

## Claims

1. Vehicle pneumatic tire, in particular for utility vehicles, with a carcass (5), with a belt (9) built on radially outside the carcass (5), and with a profiled running strip (10) built on the belt (9) radially outside the belt (9), the belt (9) being formed from at least three belt plies (13, 14, 15) arranged so as to lie one on the other radially from the inside radially outward, the radially inner (13) and radially outer (15) belt ply being working plies with parallel steel strengtheners (23, 25) embedded in rubber, the strengtheners (23) of the radially inner working ply (13) forming in their orientation an angle α to the circumferential direction U of 10°≤ α ≤ 45°, and the strengtheners (25) of the radially outer working ply (15) forming an angle γ to the circumferential direction U of 10° ≤ γ ≤ 45°, and, as seen in the circumferential direction U of the vehicle tire, the strengtheners (23) of one working ply (13) having an opposite axial inclination direction to the strengtheners (25) of the other working ply (15), and the belt ply (14) arranged between these two working plies (13, 15) being a belt ply (14) designed as a zero-degree ply and having parallel strengtheners (24) which are embedded in rubber and which form in their orientation an angle β to the circumferential direction U of 0° ≤ β ≤ 5°, **characterized in that** the strengtheners (23, 25) of the two working plies (13, 15) have in each case a breaking force F of F > 1800 N and, under 10% of the breaking force, an extension D of 0.28% ≤ D < 0.32%.

2. Vehicle pneumatic tire according to the features of Claim 1, the strengtheners (23, 25) of the two working plies (13, 15) having in each case a breaking force F of F > 2500 N.

3. Vehicle pneumatic tire according to the features of one of the preceding claims, a further belt ply (16) with parallel strengtheners (26) embedded in rubber being formed radially outside the radially outer working ply (15) on the outer working ply (15).

4. Vehicle pneumatic tire according to the features of Claim 3, the further belt ply (16) being designed as a zero-degree ply, the strengtheners (26) of which form in their orientation an angle δ to the circumferential direction U of the vehicle pneumatic tire of 0° ≤ δ ≤ 5°.

5. Vehicle pneumatic tire according to the features of Claim 3, the strengtheners (26) of the additional belt ply (16) forming in their orientation an angle δ to the circumferential direction U of the vehicle pneumatic tire of 10° ≤ δ ≤ 90°, in particular of 15° ≤ δ ≤ 45°.

6. Vehicle pneumatic tire according to the features of one of the preceding claims, there being formed radially within the radially inner working ply (13), between the carcass (5) and the radially inner working ply (13), a further belt ply (17) with parallel strengtheners (27) embedded in rubber, the strengtheners (27) of which form in their orientation an angle ε to the circumferential direction U of the vehicle pneumatic tire of, in particular, 45° ≤ ε ≤ 90°.

7. Vehicle pneumatic tire according to the features of one of the preceding claims, the zero-degree ply (14) arranged radially between the two working plies (13, 15) being designed in its axial extent b in the vehicle pneumatic tire to be, in particular, at least 10 mm smaller than each of the two working plies (13, 15).

8. Vehicle pneumatic tire according to the features of Claim 7, the zero-degree ply (14) ending, on both axial sides, within the axial range of extent of each of the two working plies (13, 15).

9. Vehicle pneumatic tire according to the features of one of the preceding claims, the radially outer of the two working plies (15) being designed in its axial extent c in the vehicle pneumatic tire to be smaller than the radially inner of the two working plies (13), in particular the radially outer (15) of the two working plies (13, 15) ending, on both axial sides, within the axial range of extent of the radially inner (13) of the two working plies (13, 15).

10. Vehicle pneumatic tire according to the features of one or more of the preceding claims, the strengtheners (24, 26) of the zero-degree ply or zero-degree plies (14, 16) being strengtheners made from steel.

11. Vehicle pneumatic tire according to the features of one or more of the preceding claims, the strengtheners (24) at least of the zero-degree ply (14) arranged between the working plies (13, 15) being high-elongation cords (HE).

12. Vehicle pneumatic tire according to the features of one of Claims 3 to 6, the strengtheners (26, 27) of the additional belt ply (16, 17) being strengtheners made from steel.

## Revendications

1. Pneumatique de véhicule - en particulier pour véhicules utilitaires - comprenant une carcasse (5) avec une ceinture (9) montée radialement à l'extérieur de la carcasse (5) et avec une bande de roulement (10) profilée montée radialement à l'extérieur de la ceinture (9) sur la ceinture (9), la ceinture (9) étant constituée d'au moins trois couches de ceinture (13, 14, 15) disposées les unes au-dessus des autres radialement de l'intérieur vers l'extérieur, la couche de ceinture radialement intérieure (13) et la couche de ceinture radialement extérieure (15) étant des couches de travail avec des renforts (23, 25) parallèles noyés dans du caoutchouc, les renforts (23) de la couche de travail radialement intérieure (13) formant dans leur orientation un angle α avec la direction périphérique U, où 10° ≤ α ≤ 45° et les renforts (25) de la couche de travail radialement extérieure (15) formant un angle γ avec la direction périphérique U où 10° ≤ γ ≤ 45°, les renforts (23) de l'une des couches de travail (13), vus dans la direction périphérique U du pneu de véhicule, présentant une direction d'inclinaison axiale opposée aux renforts (25) de l'autre couche de travail (15), et
la couche de ceinture (14) disposée entre ces deux couches de travail (13, 15) étant une couche de ceinture (14) réalisée sous forme de couche de zéro degré avec des renforts (24) parallèles encastrés dans du caoutchouc qui forment dans leur orientation un angle β, où 0° ≤ β ≤ 5° par rapport à la direction périphérique U,
**caractérisé en ce que**
les renforts (23, 25) des deux couches de travail (13, 15) présentent à chaque fois une force de rupture F avec F > 1800 N et, à 10 % de la force de rupture, un allongement D de 0,28 % ≤D ≤ 0,32 %.

2. Pneumatique de véhicule selon les caractéristiques de la revendication 1,
dans lequel les renforts (23, 25) des deux couches de travail (13, 15) présentent à chaque fois une force de rupture F avec F > 2500 N.

3. Pneumatique de véhicule selon les caractéristiques de l'une quelconque des revendications précédentes,
dans lequel une couche de ceinture supplémentaire (16) avec des renforts (26) parallèles noyés dans du caoutchouc est réalisée radialement à l'extérieur de la couche de travail radialement extérieure (15) sur la couche de travail extérieure (15).

4. Pneumatique de véhicule selon les caractéristiques de la revendication 3,
dans lequel la couche de ceinture supplémentaire (16) est réalisée sous forme de couche de zéro degré dont les renforts (26) forment dans leur orientation un angle δ avec la direction périphérique U du pneumatique de véhicule, où 0° ≤ δ ≤ 5°.

5. Pneumatique de véhicule selon les caractéristiques de la revendication 3,
dans lequel les renforts (26) de la couche de ceinture supplémentaire (16) forment dans leur orientation un angle δ avec la direction périphérique U du pneumatique de véhicule, où 10° ≤ δ ≤ 90°, en particulier où 15° ≤ δ ≤ 45°.

6. Pneumatique de véhicule selon les caractéristiques de l'une quelconque des revendications précédentes,
dans lequel une couche de ceinture supplémentaire (17) avec des renforts (27) parallèles encastrés dans du caoutchouc est réalisée radialement à l'intérieur de la couche de travail radialement intérieure (13) entre la carcasse (5) et la couche de travail radialement intérieure (13), ses renforts (27) formant dans leur orientation un angle ε avec la direction périphérique U du pneumatique de véhicule, en particulier où 45° ≤ ε ≤ 90°.

7. Pneumatique de véhicule selon les caractéristiques de l'une quelconque des revendications précédentes,
dans lequel la couche de zéro degré (14) disposée radialement entre les deux couches de travail (13, 15) est réalisée dans son étendue axiale b dans le pneumatique de véhicule de manière à être inférieure, notamment d'au moins 10 mm, à chacune des deux couches de travail (13, 15).

8. Pneumatique de véhicule selon les caractéristiques de la revendication 7,
dans lequel la couche de zéro degré (14) se termine vers les deux côtés axiaux à l'intérieur de la région d'étendue axiale de chacune des deux couches de travail (13, 15).

9. Pneumatique de véhicule selon les caractéristiques de l'une quelconque des revendications précédentes,
dans lequel la couche de travail radialement extérieure des deux couches de travail (15) est réalisée dans son étendue axiale c dans le pneumatique de véhicule de manière à être inférieure à la couche radialement intérieure des deux couches de travail (13),
la couche de travail radialement extérieure (15) des deux couches de travail (13, 15) se terminant vers les deux côtés axiaux à l'intérieur de la région d'étendue axiale de la couche de travail radialement intérieure (13) des deux couches de travail (13, 15).

10. Pneumatique de véhicule selon les caractéristiques de l'une ou plusieurs des revendications précédentes,
dans lequel les renforts (24, 26) de la ou des couches de zéro degré (14, 16) sont des renforts en acier.

11. Pneumatique de véhicule selon les caractéristiques de l'une ou plusieurs des revendications précédentes,
dans lequel les renforts (24) au moins de la couche de zéro degré (14) disposée entre les couches de travail (13, 15) sont des câbles à allongement élevé (HE).

12. Pneumatique de véhicule selon les caractéristiques de l'une quelconque des revendications 3 à 6, dans lequel les renforts (26, 27) de la couche de ceinture supplémentaire (16, 17) sont des renforts en acier.
